# EUROPÄISCHE PATENTSCHRIFT

(11) **EP 2 796 254 B1**
(45) Veröffentlichungstag und Bekanntmachung des Hinweises auf die Patenterteilung: **24.02.2016**
(21) Anmeldenummer: 14156738.8
(22) Anmeldetag: 26.02.2014
(51) Int. Cl.: B26D 7/26

(54) **Vorrichtung zum Positionieren oder Verstellen einer Baugruppe einer Lebensmittelverarbeitungsvorrichtung**
Device for positioning or adjusting a module of a food processing device
Dispositif de positionnement ou de réglage d'un module d'un dispositif de traitement de produits alimentaires

(30) Priorität: 24.04.2013 DE 102013207399
(43) Veröffentlichungstag der Anmeldung: 29.10.2014
(73) Patentinhaber: Weber Maschinenbau GmbH Breidenbach, 35236 Breidenbach (DE)
(72) Erfinder: Nispel, Thomas, 35232 Dautphetal (DE)
(74) Vertreter: Manitz, Finsterwald & Partner GbR

(56) Entgegenhaltungen:
- DE-A1- 1 447 355
- DE-A1- 10 148 595
- US-A- 3 961 547
- US-A- 4 526 505

## Beschreibung

Die vorliegende Erfindung betrifft eine Vorrichtung zum Positionieren oder Verstellen eines Messerkopfes eines Hochleistungs-Slicers, mit wenigstens einer Führungsstange und wenigstens einer Führungsaufnahme für die Führungsstange, wobei die Führungsstange und die Führungsaufnahme gemeinsam eine Linearführung zum Verschieben des Messerkopfes gegenüber einem Basiselement des Hochleistungs-Slicers bilden.

Bei der industriellen Verarbeitung von Lebensmittelprodukten, wie z.B. Fleisch-, Wurst- oder Käseprodukten, ist es häufig erforderlich, an einer Maschine die Position einer bestimmten Baugruppe zu ändern oder anzupassen. Beispielsweise kann bei einem zum Aufschneiden von Lebensmittelprodukten vorgesehenen Hochleistungs-Slicer der das Schneidmesser tragende Messerkopf gegenüber einer Produktzuführung höhen- und/oder querverstellbar sein, um so je nach Art und Anzahl der aufzuschneidenden Produkte einen optimalen Auftreffpunkt der Messerschneide auf die Produktoberfläche festzulegen. Eine Linearführung ermöglicht bei derartigen verstellbaren Anordnungen eine exakte Positionierung.

Ein Hochleistungs-Slicer mit einem verstellbaren Messerkopf ist beispielsweise in der DE 101 48 595 A1 offenbart.

Linearführungen sind in unterschiedlichen Formen bekannt, wobei eine Führungsstange der Linearführung nicht zwingend zylindrisch ist, sondern auch als eckige, polygonale oder profilierte Schiene ausgeführt sein kann. Bei dem vorstehend genannten Basiselement, gegenüber welchem der Messerkopf zu verstellen ist, kann es sich um einen Rahmen oder ein Gestell des zugehörigen Hochleistungs-Slicers handeln oder um ein eigenständiges stationäres Bauteil des Hochleistungs-Slicers.

Bei der Montage einer verstellbaren Baugruppe ist üblicherweise die Führungsstange entlang ihrer Längsachse in die Führungsaufnahme einzuführen und so lange in dieser zu verschieben, bis die Baugruppe die gewünschte Position erreicht hat. Dies ist mit einem beträchtlichen Aufwand verbunden, insbesondere im Fall von schweren Baugruppen wie Messerköpfen. Bei Lebensmittelverarbeitungsvorrichtungen besteht ein weiteres Problem von Linearführungen darin, dass sich zwischen der Führungsstange und der Führungsaufnahme schwer zu entfernende Verunreinigungen ansammeln können, welche ein beträchtliches hygienisches Problem darstellen, wenn vorgeschriebene Reinigungsvorgänge nicht ordnungsgemäß durchgeführt werden.

Es besteht daher der Wunsch, bei Positionier- und Verstellvorrichtungen von Lebensmittelverarbeitungsvorrichtungen das Einhalten des erforderlichen Hygienegrades zu erleichtern und die Handhabbarkeit zu verbessern.

Die Lösung der Aufgabe erfolgt durch eine Vorrichtung mit den Merkmalen des Anspruchs 1.

Erfindungsgemäß ist die Führungsaufnahme geteilt ausgeführt. Dadurch ist die Führungsaufnahme besser einer Reinigung zugänglich und kann die Führungsaufnahme bei entsprechender Ausgestaltung im Bedarfsfall leicht geöffnet oder zerlegt werden, um so z.B. die Reinigung der Linearführung zu erleichtern. Weiterhin können bei der Montage des zugehörigen Hochleistungs-Slicers oder bei einem gewünschten Wechsel der Baugruppe die Einzelteile der Führungsaufnahme bei entsprechender Ausgestaltung so weit voneinander entfernt werden, dass ein erleichtertes Einführen der Führungsstange in die Führungsaufnahme möglich ist.

Weiterbildungen der Erfindung sind in den abhängigen Ansprüchen, der Zeichnung sowie der Beschreibung angegeben.

Gemäß einer Ausführungsform der Erfindung besteht an wenigstens einem Öffnungsabschnitt der Führungsaufnahme ein Zwischenraum zwischen zwei Teilen der Führungsaufnahme. Die Führungsaufnahme ist dann von außen einsehbar und für einen Eingriff zugänglich, was bei einer Reinigung von beträchtlichem Vorteil ist. Die Öffnung kann hierbei derart angeordnet sein, dass sie für einen Bediener der Anlage besonders gut erreichbar ist. Bei Bedarf kann die Führungsaufnahme auch mehrere Öffnungsabschnitte aufweisen und insbesondere zu mehreren Seiten hin geöffnet sein.

Eine weitere Ausführungsform der Erfindung sieht vor, dass die Führungsaufnahme an einem Basiselement der Vorrichtung angebracht ist, wobei wenigstens ein Teil der geteilten Führungsaufnahme von der Führungsstange weg bewegbar und/oder von dem Basiselement abnehmbar ist. Durch ein Auseinanderbewegen der einzelnen Teile der Führungsaufnahme kann beispielsweise ein seitliches Einführen der Führungsstange in die Führungsaufnahme, also ein Einführen quer zur Längsachse der Führungsstange, ermöglicht werden. Eine derartige seitliche Einführbarkeit ist beispielsweise beim Montieren eines schweren Messerkopfes von Vorteil, da dieser dann nicht zunächst angehoben und anschließend wieder abgesenkt werden muss, sondern gleich in der richtigen Höhe eingesetzt werden kann. Es kann auch sein, dass alle Teile der Führungsaufnahme von dem Basiselement abnehmbar sind, um so eine leichtere Reinigung und/oder einen leichteren Austausch zu ermöglichen.

Vorzugsweise sind wenigstens zwei Teile der geteilten Führungsaufnahme relativ zueinander, insbesondere in Richtung einer Längsachse der Führungsstange und/oder quer zu einer Längsachse der Führungsstange, verstellbar. Realisierbar ist dies z.B. durch Schraubverbindungen mit Langlöchern. Dies ermöglicht eine individuelle Justierung der Linearführung.

Eine spezielle Ausgestaltung der Erfindung sieht vor, dass die Führungsaufnahme in wenigstens zwei und bevorzugt in genau zwei Teile geteilt ist, welcher einander gegenüberliegend beidseits der Führungsstange angeordnet sind. Aufgrund der gegenüberliegenden Anordnung bilden die beiden Teile eine Aufnahme für die Führungsstange, auch wenn die Stange nicht vollständig umschlossen ist. Bei Bedarf kann die Führungsaufnahme auch in mehr als zwei Teile geteilt sein. Beispielsweise könnten vier Teile der Führungsaufnahme in einer Querschnittsebene der Linearführung gesehen kreuzförmig oder sternförmig angeordnet sein. Die einander gegenüberliegenden Teile der Führungsaufnahme sind vorzugsweise als Backen oder Segmente ausgeführt. Man kann sich die Backen oder Segmente als Führungsabschnitte vorstellen, welche nach einem gedachten Wegschneiden bestimmter Areale von einer ringförmig geschlossenen Aufnahme übrig geblieben sind.

Es können auch wenigstens zwei Teile der Führungsaufnahme vorgespannt sein, insbesondere in Richtung einer Längsachse der Führungsstange und/oder quer zu einer Längsachse der Führungsstange. Eine derartige Vorspannung kann zur Beseitigung eines unerwünschten Spiels der Linearführung dienen. Ferner kann durch die Vorspannung eine Selbsthemmung der Linearführung bewirkt werden.

Vorzugsweise sind die Teile der Führungsaufnahme an einem Basiselement der Vorrichtung lösbar angebracht, insbesondere angeschraubt. Zum Auswechseln oder für eine gründliche Reinigung können die Teile von dem Basiselement gelöst werden. Das Basiselement kann insbesondere plattenförmig ausgebildet sein.

Weiterhin können die Teile als Backen und/oder Segmente ausgebildet und/oder plattenförmig oder flachquaderförmig oder blockförmig sein, wobei vorzugsweise die Dicke der Teile geringer ist als ein Außendurchmesser der Führungsstange. Besonders bevorzugt ist die Dicke der Teile sogar geringer als ein Kerndurchmesser der als Gewindespindel ausgebildeten Führungsstange. Plattenförmige oder flachquaderförmige Bauteile sind besonders leicht herstellbar. Sofern die Dicke der Teile geringer ist als ein Außen- bzw. Kerndurchmesser der Führungsstange, ergibt sich automatisch eine Öffnung der Führungsaufnahme, und zwar insbesondere in dem Sinne, dass die Außenseite der Führungsstange im Bereich der Führungsaufnahme bereichsweise freiliegt.

Gemäß einer weiteren Ausführungsform der Erfindung ist die Führungsstange als glatte, vorzugsweise zylindrische, Gleitstange ausgebildet. Die Führungsaufnahme kann dann als geteilte Gleithülse ausgebildet sein, sodass sie zusammen mit der Gleitstange eine reine Gleitführung bildet. Grundsätzlich könnte die Führungsaufnahme jedoch z.B. auch als geteilter Wälzkörperkäfig ausgebildet sein und gemeinsam mit einer Gleitstange eine Wälzkörperführung bilden.

Demgegenüber sieht eine weitere Ausgestaltung der Erfindung vor, dass die Führungsstange zumindest abschnittsweise als Gewindespindel ausgebildet ist, welche mit der als geteilte Spindelmutter ausgebildeten Führungsaufnahme zusammenwirkt, um einen Linearantrieb zu bilden. Ein derartiger Linearantrieb kann sowohl zum Führen als auch zum gesteuerten Bewegen der an der Gewindespindel vorgesehenen Baugruppe dienen. Durch Drehen der Gewindespindel um ihre Längsachse kann die Gewindespindel in der Führungsaufnahme verschoben und somit die Baugruppe positioniert bzw. verstellt werden.

Vorzugsweise weist die Gewindespindel zumindest ein Rundgewinde auf. Ein Rundgewinde ist im Vergleich mit einem Spitzgewinde oder einem Trapezgewinde leichter zu reinigen. Zudem ermöglicht ein Rundgewinde ein relativ leichtgängiges Schrauben.

Eine spezielle Ausgestaltung der Erfindung sieht außerdem vor, dass tangentiale Übergänge zwischen dem Gewinde, insbesondere den Gewindespitzen, der Spindelmutter und dem Gewinde, insbesondere dem Gewindegrund, der Gewindespindel bestehen. Durch solche tangentialen Übergänge können die Kontaktflächen des Gewindes vor Verunreinigungen geschützt werden. Genauer gesagt können die Gewindespitzen der Spindelmutter bei einer solchen Konstellation als Abstreifelemente dienen, welche etwaige Fremdkörper abfangen, bevor diese in das Innere der Führungsaufnahme eindringen können. Prinzipiell sind derartige tangentiale Übergänge auch bei einer Anordnung aus Gleitstange und Gleithülse vorteilhaft. Die tangentialen Übergänge können insbesondere an einem Rand eines zwischen zwei Teilen der geteilten Spindelmutter ausgebildeten Zwischenraums ausgebildet sein.

Des Weiteren kann wenigstens ein Teil der geteilten Führungsaufnahme zumindest abschnittsweise federnd und/oder elastisch ausgebildet sein. Durch Drücken eines derartigen federnden bzw. elastischen Teils gegen die Führungsstange kann eine weiter verbesserte Dichtwirkung erzielt werden.

Wenigstens ein Teil der geteilten Führungsaufnahme kann in einer von der Führungsstange beabstandeten Stellung einen Innenradius definieren, der geringer ist als ein Außenradius der Führungsstange. Beim Zusammenführen der Führungsstange und eines der Teile der Führungsaufnahme wird das betreffende Teil dann in geringem Umfang, insbesondere elastisch, aufgeweitet, so dass sich Innenradius und Außenradius angleichen. Hierdurch kann aufgrund des erhöhten Anpressdrucks eine besonders effektive Abdichtung der Linearführung gegenüber der Umgebung erzielt werden.

Die Erfindung betrifft auch eine Vorrichtung zur Verarbeitung von Lebensmittelprodukten, insbesondere einen Hochleistungs-Slicer, mit einer Baugruppe, insbesondere einem Messerkopf, die gegenüber einem Basiselement, insbesondere einer Produktzuführung, verstellbar ist, wobei zum Positionieren oder Verstellen der Baugruppe eine Vorrichtung wie hierin beschrieben vorgesehen ist.

Die Erfindung wird nachfolgend beispielhaft unter Bezugnahme auf die Zeichnung beschrieben.
- Fig. 1A: ist eine vereinfachte Seitenansicht eines erfindungsgemäßen Hochleistungs-Slicers, welcher eine Vorrichtung zum Verstellen eines Messerkopfs aufweist.
- Fig. 1B: ist eine rückwärtige Teilansicht eines erfindungsgemäßen Hochleistungs-Slicers, welcher eine Vorrichtung zum Verstellen eines Messerkopfs in einer alternativen Ausgestaltung aufweist.
- Fig. 2: ist eine vergrößerte Ansicht einer Linearführung der in Fig. 1A gezeigten Vorrichtung zum Verstellen des Messerkopfs.
- Fig. 3 bis 5: zeigen verschiedene Ausführungsformen für Linearführungen einer erfindungsgemäßen Vorrichtung zum Verstellen des Messerkopfs.
- Fig. 6: ist eine perspektivische Darstellung der in Fig. 2 gezeigten Linearführung, welche einen tangentialen Übergang zwischen dem Gewinde einer Spindelmutter und dem Gewinde einer Gewindespindel zeigt.

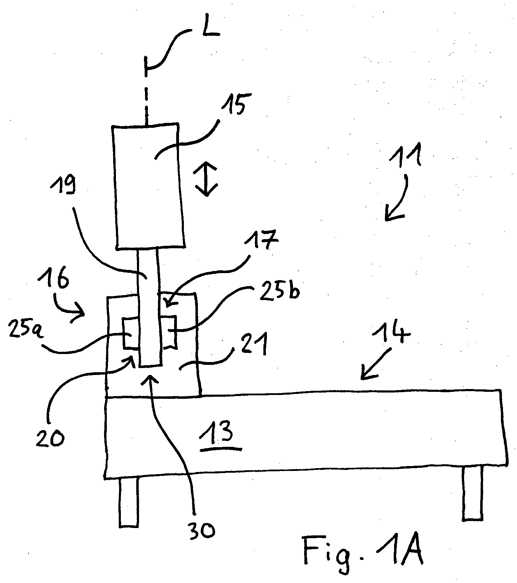

Der in Fig. 1A schematisch dargestellte Hochleistungs-Slicer 11 weist einen Grundrahmen 13 mit einer Produktzuführung 14 sowie einen Messerkopf 15 auf. Der Messerkopf 15 trägt ein nicht eigens dargestelltes Schneidmesser, bei welchem es sich um ein Sichel-, Spiral- oder Cuttermesser oder um ein Kreismesser handeln kann. Während des Betriebs des Hochleistungs-Slicers 11 bewegt sich das Schneidmesser in einer Schneidebene und Lebensmittelprodukte wie Wurstriegel werden mittels der Produktzuführung 14 der Schneidebene, vorzugsweise auf mehreren Spuren, zugestellt.

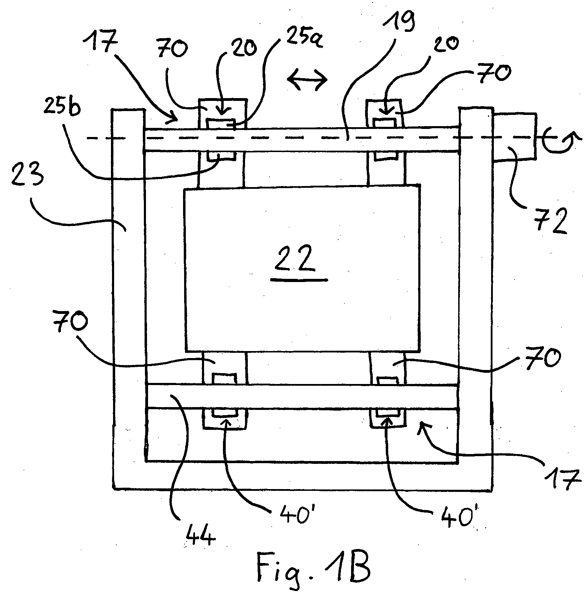

Um hierbei für unterschiedliche Arten oder Anzahlen von Produkten die jeweils optimale Messerposition festlegen zu können, ist der Messerkopf 15 mittels einer Verstellvorrichtung 16 höhenverstellbar. Zusätzlich kann eine nicht dargestellte Querverstellmöglichkeit für den Messerkopf 15 vorgesehen sein. Die Höhenverstellung erfolgt hierbei mittels zweier beabstandeter Linearführungen 17, von welchen in Fig. 1 lediglich eine sichtbar ist. Speziell ist der Messerkopf 15 mit zwei parallelen Gewindespindeln 19 verbunden, welche jeweils in einer zugehörigen Spindelmutter 20 aufgenommen sind. Jede der Spindelmuttern 20 ist an einer vertikalen Basisplatte 21 befestigt, welche ihrerseits am Grundrahmen 13 des Hochleistungs-Slicers 11 angebracht ist. Für die beiden Spindelmuttern 20 kann auch eine gemeinsame Basisplatte vorgesehen sein. Die vertikalen Basisplatten 21 könnten auch an einem stationären Basiselement der Produktzuführung 14 angebracht sein, wobei die Produktzuführung 14 ihrerseits gegenüber dem Grundrahmen 13 verstellbar, beispielsweise verkippbar, ist. Durch gleichzeitiges Rotieren der Gewindespindeln 19 um ihre jeweiligen Längsachsen L kann somit auf Wunsch der Messerkopf 15 in seiner Höhe verstellt werden, wie durch den Doppelpfeil verdeutlicht ist.

Zur seitlichen Verstellung eines Messerkopfs kann insbesondere eine wie in Fig. 1B gezeigte Anordnung verwendet werden. Bei dieser Anordnung ist eine Trägerplatte 22 verschiebbar an einem festen Stützrahmen 23 aufgehängt. Die Trägerplatte 22 dient hierbei der Befestigung eines in Fig. 1B nicht dargestellten Messerkopfs. An dem Stützrahmen 23 sind zwei horizontale Linearführungen 17 in Form einer oberen Gewindespindel 19 und einer dazu parallelen, als glatte Gleitstange ausgebildeten Führungsstange 44 vorgesehen. Die Gewindespindel 19 ist in zwei Spindelmuttern 20 aufgenommen, welche über Auskragungsabschnitte 70 fest mit der Trägerplatte 22 verbunden sind. In ähnlicher Weise ist die Führungsstange 44 in zwei Führungsaufnahmen 40' aufgenommen, welche mit der Trägerplatte 22 verbunden sind. Ein am Stützrahmen 23 montierter Antriebsmotor 72 dient dazu, die Gewindespindel 19 um ihre Längsachse L rotierend anzutreiben, um so die Trägerplatte 22 in horizontaler Richtung gegenüber dem Stützrahmen 23 zu verschieben, wie durch den Doppelpfeil dargestellt ist. Bei Bedarf kann zusätzlich der Stützrahmen 23 samt Trägerplatte 22, Gewindespindel 19 und Gleitstange 44 gegenüber einem in Fig. 1B nicht dargestellten Grundrahmen verstellbar sein, insbesondere senkrecht zur Längserstreckung der Gewindespindel 19 und der Gleitstange 44.

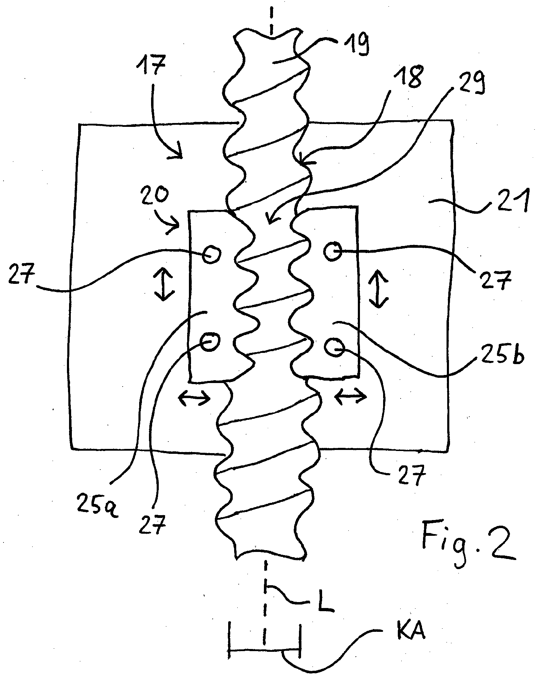

Wie insbesondere in der vergrößerten Darstellung gemäß Fig. 2 zu erkennen ist, ist für jede der Linearführungen 17 die Spindelmutter 20 geteilt ausgeführt. Speziell umfasst die Spindelmutter 20 zwei plattenartige Führungsbacken 25a, 25b, welche einander gegenüberliegend beidseits der Gewindespindel 19 angeordnet sind. Die Führungsbacken 25a, 25b sind hierbei mittels Schrauben 27 an der Basisplatte 21 festgeschraubt. Die Schrauben 27 sind durch Langlöcher in der jeweiligen Führungsbacke 25a, 25b geführt, so dass die Führungsbacken 25a, 25b sowohl in Richtung der Längsachse L der Gewindespindel 19 als auch quer zu der Längsachse L verstellbar sind. Die Linearführung 17 kann auf diese Weise leicht justiert werden. Bei Bedarf können die Führungsbacken 25a, 25b von der Basisplatte 21 abgeschraubt werden. Die Führungsbacken 25a, 25b können auch in axialer Richtung und/oder in radialer Richtung vorgespannt sein, um so beispielsweise einen Selbsthemmungseffekt der Linearführung 17 zu erzielen. Während die Gewindespindel 19 vorzugsweise aus Metall, insbesondere Edelstahl, ausgebildet ist, können die Führungsbacken 25a, 25b aus einem elastischen Material, insbesondere aus einem elastischen Kunststoff, gefertigt sein. Aus Fig. 2 geht weiterhin hervor, dass das Gewinde 18 der Gewindespindel 19 als Rundgewinde und nicht wie auf dem Fachgebiet üblich als Spitzgewinde oder als Trapezgewinde ausgebildet ist.

Dadurch, dass die Dicke der Führungsbacken 25a, 25b geringer ist als der Kerndurchmesser KA der Gewindespindel 19, ist die Spindelmutter 20 an zwei Seiten geöffnet, das heißt es besteht jeweils ein Zwischenraum 29 zwischen den beiden Führungsbacken 25a, 25b. Aufgrund dieses Zwischenraums 29 ist die Gewindespindel 19 auch im Bereich der Spindelmutter 20 einsehbar und für einen bedarfsweisen Eingriff, insbesondere einer Reinigung, zugänglich.

Während der Montage des in Fig. 1A gezeigten Messerkopfs 15 am Grundrahmen 13 des Hochleistungs-Slicers 11 ist es nicht erforderlich, den Messerkopf 15 so weit anzuheben, bis die unteren Enden 30 der Gewindespindeln 19 jeweils von oben in die Spindelmuttern 20 eingeführt werden können. Vielmehr kann jeweils eine der beiden Führungsbacken 25a, 25b von der Gewindespindel 19 wegbewegt, zum Beispiel weggeschoben oder weggeklappt, werden, so dass die betreffende Gewindespindel 19 auch von der Seite aus in die Spindelmutter 20 eingeführt werden kann. Eine der Führungsbacken 25a, 25b kann z.B. zu diesem Zweck auch vollständig von der Basisplatte 21 abgenommen werden. Entsprechend vorteilhaft gestaltet sich die Montage der in Fig. 1B gezeigten Trägerplatte 22 am Stützrahmen 23.

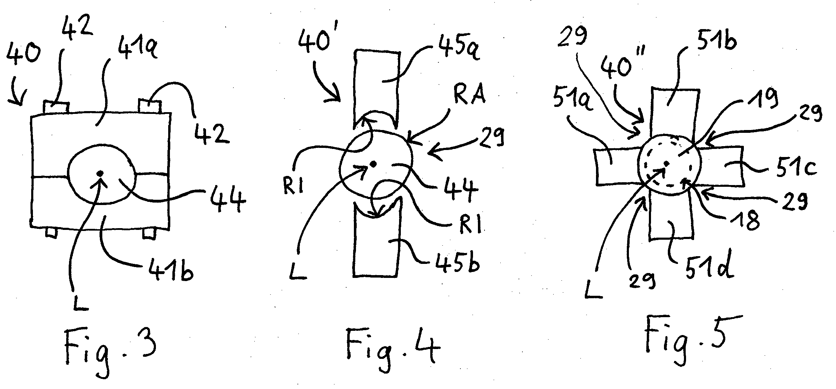

Die Fig. 3 bis 5 zeigen weitere Ausführungsbeispiele für geteilte Führungsaufnahmen 40, 40', 40", welche im Prinzip ähnlich wie die in Fig. 2 dargestellte Spindelmutter 20 aufgebaut sind. Bei der in Fig. 3 dargestellten Führungsaufnahme 40 sind zwei sich ergänzende, klammerartige Gleitelemente 41 a, 41 b mittels Spannelementen 42 gegeneinander gespannt und bilden in diesem Zustand eine geteilte Aufnahme, welche eine als glatte Gleitstange ausgebildete Führungsstange 44 vollständig umschließt. Das heißt hier besteht kein Zwischenraum zwischen den Teilen der Aufnahme. Auch die in Fig. 4 gezeigte Führungsaufnahme 40' ist als reine Gleitführung ausgebildet, wobei hier jedoch ähnlich wie bei der Ausführungsform gemäß Fig. 2 ein Zwischenraum 29 zwischen zwei gegenüberliegenden Gleitbacken 45a, 45b besteht. Zudem definiert jede der Gleitbacken 45a, 45b einen Innenradius RI, der geringer ist als der Außenradius RA der Führungsstange 44. Bei dem in Fig. 5 dargestellten Ausführungsbeispiel ist als Führungsstange wie bei der Ausführungsform gemäß Fig. 2 eine Gewindespindel 19 mit einem Gewinde 18 vorgesehen. Zudem sind hier vier mit Gewinde versehene Führungsbacken 51 a, 51b, 51 c und 51d vorgesehen, welche wie dargestellt kreuz- oder sternförmig angeordnet sind. Zwischen den Führungsbacken 51a, 51b, 51c und 51d bestehen ähnlich wie bei den Ausführungsformen gemäß Fig. 2 und Fig. 4 Zwischenräume 29.

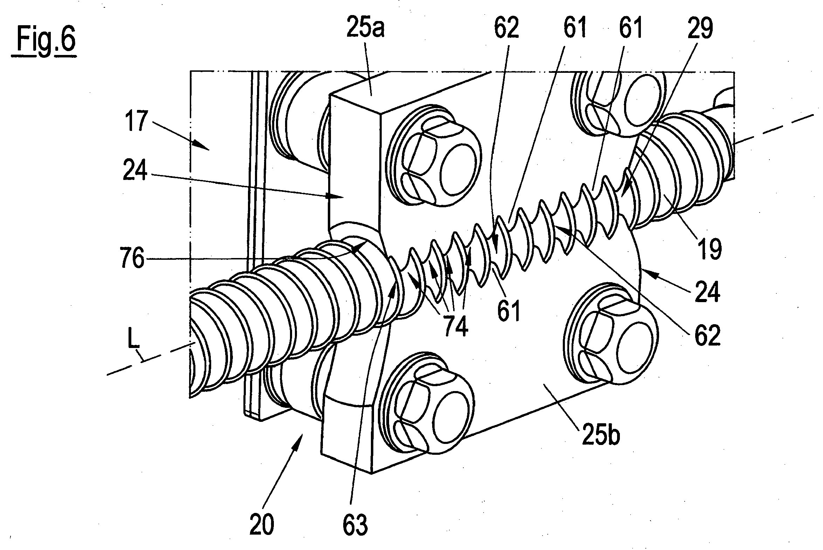

Fig. 6 zeigt eine perspektivische Ansicht der in Fig. 2 gezeigten Linearführung 17. Es ist zu erkennen, dass jeweils zwischen den Gewindespitzen 61 der Spindelmutter 20 und dem Gewindegrund 62 der Gewindespindel 19 ein tangentialer Übergang 74 besteht. Weiterhin sind die axialen Stirnseiten 24 der Spindelmutter 20 derart gestaltet, dass sich das Material der Spindelmutter 20 um einen geringfügigen Betrag über eine Gewindespitze 63 der Gewindespindel 19 hinweg erstreckt, und zwar in einer bezüglich einer Umfangsrichtung der Gewindespindel 19 fortschreitenden, dem Gewinde der Gewindespindel 19 folgenden Weise, so dass auch hier tangentiale Übergänge 76 vorhanden sind. Die Gewindespitzen 61 wirken aufgrund dieser stirnseitigen tangentialen Übergänge 76 jeweils als eine Art Abstreifer und halten Verunreinigungen von den Kontaktflächen des Gewindes 18 fern. Ein tangentialer Übergang wie in Fig. 6 gezeigt ist vorzugsweise jeweils vollständig an den Rändern der zwischen den Führungsbacken 25a, 25b der Spindelmutter 20 ausgebildeten Zwischenräumen 29 ausgebildet. Folglich wirken die Gewindespitzen 61 der Führungsbacken 25a, 25b der Spindelmutter 20 nicht nur an den Stirnseiten 24 der Spindelmutter 20, sondern auch an den Rändern der Zwischenräume 29 jeweils als eine Art Abstreifer.

Insgesamt ermöglicht die Erfindung eine bessere Reinigung und eine leichtere Handhabbarkeit einer an einem Hochleistungs-Slicer 11 vorgesehenen Verstellvorrichtung 16.

### Bezugszeichenliste

- 11: Hochleistungs-Slicer
- 13: Grundrahmen
- 14: Produktzuführung
- 15: Messerkopf
- 16: Verstellvorrichtung
- 17: Linearführung
- 18: Gewinde
- 19: Gewindespindel
- 20: Spindelmutter
- 21: Basisplatte
- 22: Trägerplatte
- 23: Stützrahmen
- 24: Stirnseite
- 25a, 25b: Führungsbacke
- 27: Schraube
- 29: Zwischenraum
- 30: unteres Ende
- 40, 40', 40": Führungsaufnahme
- 41a, 41b: Gleitelement
- 42: Spannelement
- 44: glatte Führungsstange
- 45a, 45b: Gleitbacke
- 51a -d: Gewindebacke
- 61: Gewindespitze der Spindelmutter
- 62: Gewindegrund
- 63: Gewindespitze der Gewindespindel
- 70: Auskragungsabschnitt
- 72: Antriebsmotor
- 74: tangentialer Übergang
- 76: tangentialer Übergang

- L: Längsachse
- KA: Kerndurchmesser
- RA: Außenradius
- RI: Innenradius

## Patentansprüche

1. Vorrichtung (16) zum Positionieren oder Verstellen eines Messerkopfes (15) eines Hochleistungs-Slicers (11), mit wenigstens einer Führungsstange (19, 44) und wenigstens einer Führungsaufnahme (20, 40, 40', 40") für die Führungsstange (19, 44), wobei die Führungsstange (19, 44) und die Führungsaufnahme (20, 40, 40', 40") gemeinsam eine Linearführung (17) zum Verschieben des Messerkopfes (15) gegenüber einem Basiselement (13, 14, 21, 23) des Hochleistungs-Slicers (11) bilden,
**dadurch gekennzeichnet, dass**
die Führungsaufnahme (20, 40, 40', 40") geteilt ausgeführt ist.

2. Vorrichtung nach Anspruch 1,
**dadurch gekennzeichnet, dass**
an wenigstens einem Öffnungsabschnitt der Führungsaufnahme (20, 40', 40") ein Zwischenraum (29) zwischen zwei Teilen (25a, 25b, 45a, 45b, 51a-d) der Führungsaufnahme besteht.

3. Vorrichtung nach Anspruch 1 oder 2,
**dadurch gekennzeichnet, dass**
die Führungsaufnahme (20, 40, 40', 40") an einem Basiselement (13, 14, 21, 22) der Vorrichtung (16) angebracht ist, wobei wenigstens ein Teil (25a, 25b, 41a, 41b, 45a, 45b, 51a-d) der geteilten Führungsaufnahme (20, 40, 40', 40") von der Führungsstange (19, 44) weg bewegbar und/oder von dem Basiselement (13, 14, 21, 22) abnehmbar ist.

4. Vorrichtung nach einem, der vorstehenden Ansprüche,
**dadurch gekennzeichnet ,dass**
wenigstens zwei Teile (25a, 25b, 41a, 41b, 45a, 45b, 51a-d) der geteilten Führungsaufnahme (20, 40, 40', 40") relativ zueinander, insbesondere in Richtung einer Längsachse (L) der Führungsstange (19, 44) und/oder quer zu einer Längsachse (L) der Führungsstange (19, 44), verstellbar sind.

5. Vorrichtung nach einem der vorstehenden Ansprüche,
**dadurch gekennzeichnet , dass**
die Führungsaufnahme (20, 40, 40', 40") in wenigstens zwei und bevorzugt in genau zwei Teile (25a, 25b, 41a, 41b, 45a, 45b, 51a-d) geteilt ist, welche einander gegenüberliegend beidseits der Führungsstange (19, 44) angeordnet sind.

6. Vorrichtung nach einem der vorstehenden Ansprüche,
**dadurch gekennzeichnet , dass**
wenigstens zwei Teile (25a, 25b, 41a, 41b, 45a, 45b, 51a-d) der Führungsaufnahme (20, 40, 40', 40") vorgespannt sind, insbesondere in Richtung einer Längsachse (L) der Führungsstange (19, 44) und/oder quer zu einer Längsachse (L) der Führungsstange (19, 44).

7. Vorrichtung nach einem der vorstehenden Ansprüche,
**dadurch gekennzeichnet , dass**
wenigstens zwei Teile (25a, 25b, 41a, 41 b, 45a, 45b, 51a-d) der Führungsaufnahme (20, 40, 40', 40") an einem Basiselement (13, 14, 21) der Vorrichtung (16) lösbar angebracht, insbesondere angeschraubt, sind.

8. Vorrichtung nach einem der vorstehenden Ansprüche,
**dadurch gekennzeichnet, dass**
wenigstens zwei Teile (25a, 25b, 41a, 41b, 45a, 45b, 51a-d) der Führungsaufnahme (20, 40, 40', 40") als Backen oder Segmente ausgebildet und/oder platten-, flachquader- oder blockförmig sind, wobei bevorzugt die Dicke der Teile geringer ist als ein Außendurchmesser der Führungsstange (19, 44), und wobei besonders bevorzugt die Dicke der Teile geringer ist als ein Kerndurchmesser (KA) der als Gewindespindel ausgebildeten Führungsstange (19).

9. Vorrichtung nach einem der vorstehenden Ansprüche,
**dadurch gekennzeichnet, dass**
die Führungsstange (44) als glatte, vorzugsweise zylindrische, Gleitstange ausgebildet ist.

10. Vorrichtung nach einem der Ansprüche 1 bis 8,
**dadurch gekennzeichnet, dass**
die Führungsstange (19) zumindest abschnittsweise als Gewindespindel ausgebildet ist, welche mit der als geteilte Spindelmutter (20, 40") ausgebildeten Führungsaufnahme zusammenwirkt, um einen Linearantrieb zu bilden.

11. Vorrichtung nach Anspruch 10,
**dadurch gekennzeichnet, dass**
die Gewindespindel (19) zumindest ein Rundgewinde (18) aufweist.

12. Vorrichtung nach Anspruch 10 oder 11,
**dadurch gekennzeichnet, dass**
tangentiale Übergänge zwischen dem Gewinde (61), insbesondere den Gewindespitzen, der Spindelmutter (20, 40") und dem Gewinde (62), insbesondere dem Gewindegrund, der Gewindespindel (19) bestehen.

13. Vorrichtung nach einem der vorstehenden Ansprüche,
**dadurch gekennzeichnet, dass**
wenigstens ein Teil (25a, 25b, 41a, 41b, 45a, 45b, 51a-d) der geteilten Führungsaufnahme (20, 40, 40', 40") zumindest abschnittsweise federnd und/oder elastisch ausgebildet ist.

14. Vorrichtung nach einem der vorstehenden Ansprüche,
**dadurch gekennzeichnet, dass**
wenigstens ein Teil (45a, 45b) der geteilten Führungsaufnahme (40') in einer von der Führungsstange (44) beabstandeten Stellung einen Innenradius (RI) definiert, der kleiner ist als ein Außenradius (RA) der Führungsstange (44).

15. Hochleistungs-Slicer (11) mit einem Messerkopf (15), der gegenüber einem Basiselement (13, 14, 21), insbesondere einer Produktzuführung, verstellbar ist,
**dadurch gekennzeichnet, dass**
zum Positionieren oder Verstellen des Messerkopfes (15) eine Vorrichtung (16) nach einem der vorstehenden Ansprüche vorgesehen ist.

## Claims

1. An apparatus (16) for positioning or adjusting a blade head (15) of a high-performance slicer (11), having at least one guide bar (19, 44) and at least one guide receiver (20, 40, 40', 40") for the guide bar (19, 44), wherein the guide bar (19, 44) and the guide receiver (20, 40, 40', 40") together form a linear guide (17) for displacing the blade head (15) with respect to a base element (13, 14, 21, 23) of the high-performance slicer (11),
**characterised in that**
the guide receiver (20, 40, 40', 40") is designed as divided.

2. An apparatus in accordance with claim 1,
**characterised in that**
there is an intermediate space (29) between two parts (25a, 25b, 45a, 45b, 51 a-d) of the guide receiver at at least one opening section of the guide receiver (20, 40', 40").

3. An apparatus in accordance with claim 1 or claim 2,
**characterised in that**
the guide receiver (20, 40, 40', 40") is attached to a base element (13,14, 21, 22) of the apparatus (16), with at least one part (25a, 25b, 41 a, 41 b, 45a, 45b, 51a-d) of the divided guide receiver (20, 40, 40', 40") being movable away from the guide bar (19, 44) and/or being removable from the base element (13, 14, 21, 22).

4. An apparatus in accordance with any one of the preceding claims,
**characterised in that**
at least two parts (25a, 25b, 41 a, 41 b, 45a, 45b, 51 a-d) of the divided guide receiver (20, 40, 40', 40") are adjustable relative to one another, in particular in the direction of a longitudinal axis (L) of the guide bar (19, 44) and/or transversely to a longitudinal axis (L) of the guide bar (19, 44).

5. An apparatus in accordance with any one of the preceding claims,
**characterised in that**
the guide receiver (20, 40, 40', 40") is divided into at least two parts (25a, 25b, 41 a, 41 b, 45a, 45b, 51 a-d), and preferably into exactly two parts, which are arranged disposed opposite one another at both sides of the guide bar (19, 44).

6. An apparatus in accordance with any one of the preceding claims,
**characterised in that**
at least two parts (25a, 25b, 41 a, 41 b, 45a, 45b, 51a-d) of the guide receiver (20, 40, 40', 40") are preloaded, in particular in the direction of a longitudinal axis (L) of the guide bar (19, 44) and/or transversely to a longitudinal axis (L) of the guide bar (19, 44).

7. An apparatus in accordance with any one of the preceding claims,
**characterised in that**
at least two parts (25a, 25b, 41 a, 41 b, 45a, 45b, 51a-d) of the guide receiver (20, 40, 40', 40") are releasably attached, in particular screwed, to a base element (13, 14, 21) of the apparatus (16).

8. An apparatus in accordance with any one of the preceding claims,
**characterised in that**
at least two parts (25a, 25b, 41 a, 41 b, 45a, 45b, 51a-d) of the guide receiver (20, 40, 40', 40") are configured as jaws or segments and/or are of plate shape, of flat parallelepiped shape or of block shape, with the thickness of the parts preferably being smaller than an outer diameter of the guide bar (19, 44), and with the thickness of the parts particularly preferably being smaller than a core diameter (KA) of the guide bar (19) formed as a threaded spindle.

9. An apparatus in accordance with any one of the preceding claims,
**characterised in that**
the guide bar (44) is formed as a smooth, preferably cylindrical, sliding bar.

10. An apparatus in accordance with any one of the claims 1 to 8,
**characterised in that**
the guide bar (19) is formed at least sectionally as a threaded spindle which cooperates with a guide receiver formed as a split spindle nut (20, 40") to form a linear drive.

11. An apparatus in accordance with claim 10,
**characterised in that**
the threaded spindle (19) has at least one round thread (18).

12. An apparatus in accordance with claim 10 or claim 11,
**characterised in that**
there are tangential transitions between the thread (61), in particular the thread crests, of the spindle nut (20, 40") and the thread (62), in particular the thread root, of the threaded spindle (19).

13. An apparatus in accordance with any one of the preceding claims,
**characterised in that**
at least one part (25a, 25b, 41 a, 41 b, 45a, 45b, 51 a-d) of the divided guide receiver (20, 40, 40', 40") is formed at least sectionally as resilient and/or elastic.

14. An apparatus in accordance with any one of the preceding claims,
**characterised in that**
at least one part (45a, 45b) of the divided guide receiver (40') defines an internal radius (RI), which is smaller than an external radius (RA) of the guide bar (44), at a position spaced apart from the guide bar (44).

15. A high-performance slicer (11) having a blade head (15) which is adjustable with respect to a base element (13, 14, 21), in particular with respect to a product feed,
**characterised in that**
an apparatus (16) in accordance with any one of the preceding claims is provided for positioning or adjusting the blade head (15).

## Revendications

1. Dispositif (16) pour positionner ou régler une tête à couteau (15) d'une trancheuse à haute performance (11), comprenant au moins une tige de guidage (19, 44) et au moins un logement de guidage (20, 40, 40', 40") pour la tige de guidage (19, 44), dans lequel la tige de guidage (19, 44) et le logement de guidage (20, 40, 40', 40") forment conjointement un guidage linéaire (17) pour déplacer la tête à couteau (15) par rapport à un élément de base (13, 14, 21, 23) de la trancheuse à haute performance (11),
**caractérisé en ce que**
le logement de guidage (20, 40, 40', 40") est réalisé subdivisé.

2. Dispositif selon la revendication 1,
**caractérisé en ce qu'**il existe un intervalle (29) entre deux parties (25a, 25b, 45a, 45b, 51 a-d) du logement de guidage au niveau d'au moins une portion d'ouverture du logement de guidage (20, 40', 40").

3. Dispositif selon la revendication 1 ou 2,
**caractérisé en ce que** le logement de guidage (20, 40, 40', 40") est ménagé sur un élément de base (13, 14, 21, 22) du dispositif (16), et au moins une partie (25a, 25b, 41 a, 41b, 45a, 45b, 51 a-d) du logement de guidage subdivisé (20, 40, 40', 40") est déplaçable en éloignement de la tige de guidage (19, 44) et/ou susceptible d'être enlevée de l'élément de base (13, 14, 21, 22).

4. Dispositif selon l'une des revendications précédentes,
**caractérisé en ce que**
au moins deux parties (25a, 25b, 41a, 41b, 45a, 45b, 51a-d) du logement de guidage subdivisé (20, 40, 40', 40") sont déplaçables les unes par rapport aux autres, en particulier en direction d'un axe longitudinal (L) de la tige de guidage (19, 44) et/ou transversalement à un axe longitudinal (L) de la tige de guidage (19, 44).

5. Dispositif selon l'une des revendications précédentes,
**caractérisé en ce que** le logement de guidage (20, 40, 40', 40") est subdivisé en au moins deux parties et de préférence en exactement deux parties (25a, 25b, 41a, 41b, 45a, 45b, 51a-d), qui sont agencées des deux côtés de la tige de guidage (19, 44) à l'opposé l'une de l'autre.

6. Dispositif selon l'une des revendications précédentes,
**caractérisé en ce qu'**au moins deux parties (25a, 25b, 41a, 41b, 45a, 45b, 51a-d) du logement de guidage (20, 40, 40', 40") sont précontraintes, en particulier en direction d'un axe longitudinal (L) de la tige de guidage (19, 44) et/ou transversalement à un axe longitudinal (L) de la tige de guidage (19, 44).

7. Dispositif selon l'une des revendications précédentes,
**caractérisé en ce qu'**au moins deux parties (25a, 25b, 41a, 41b, 45a, 45b, 51a-d) du logement de guidage (20, 40, 40', 40") sont rapportées de façon détachable, en particulier vissées, sur un élément de base (13, 14, 21) du dispositif (16).

8. Dispositif selon l'une des revendications précédentes,
**caractérisé en ce qu'**au moins deux parties (25a, 25b, 41a, 41b, 45a, 45b, 51a-d) du logement de guidage (20, 40, 40', 40") sont réalisées comme des mâchoires ou des segments et/ou en forme de plaque, de parallélépipède plat ou en forme de bloc, de sorte que l'épaisseur des parties est de préférence plus faible qu'un diamètre extérieur de la tige de guidage (19, 44), et dans lequel l'épaisseur des parties est de manière particulièrement préférée plus faible qu'un diamètre central (KA) de la tige de guidage (19) réalisée sous forme de broche filetée.

9. Dispositif selon l'une des revendications précédentes,
**caractérisé en ce que** la tige de guidage (44) est réalisée sous forme de tige coulissante lisse, de préférence cylindrique.

10. Dispositif selon l'une des revendications 1 à 8,
**caractérisé en ce que** la tige de guidage (19) est réalisée au moins par tronçons sous forme de broche filetée, qui coopère avec le logement de guidage réalisé sous forme d'écrou à broche (20, 40"), pour former un entraînement linéaire.

11. Dispositif selon la revendication 10,
**caractérisé en ce que** la broche filetée (19) présente au moins un filetage à profil rond (18).

12. Dispositif selon la revendication 10 ou 11,
**caractérisé en ce qu'**il est prévu des transitions tangentielles entre le pas de vis (61), en particulier les pointes du pas de vis, de l'écrou à broche (20, 40") et le pas de vis (62), en particulier le fond du pas de vis, de la broche filetée (19).

13. Dispositif selon l'une des revendications précédentes,
**caractérisé en ce qu'**au moins une partie (25a, 25b, 41a, 41b, 45a, 45b, 51a-d) du logement de guidage subdivisé (20, 40, 40', 40") est réalisée au moins par tronçons avec effet ressort et/ou de manière élastique.

14. Dispositif selon l'une des revendications précédentes,
**caractérisé en ce qu'**au moins une partie (45a, 45b) du logement de guidage subdivisé (40') définit, dans une position écartée de la tige de guidage (44), un rayon intérieur (RI) qui est plus petit qu'un rayon extérieur (RA) de la tige de guidage (44).

15. Trancheuse à haute performance (11) comprenant une tête à couteau (15) qui est déplaçable par rapport à un élément de base (13, 14, 21), en particulier par rapport à une amenée de produits, **caractérisé en ce que** pour le positionnement ou le déplacement de la tête à couteau (15) il est prévu un dispositif (16) selon l'une des revendications précédentes.
